# EUROPEAN PATENT SPECIFICATION

(11) **EP 3 081 768 B1**
(45) Date of publication and mention of the grant of the patent: **05.06.2019**
(21) Application number: 15199861.4
(22) Date of filing: 14.12.2015
(51) Int. Cl.: F01D 25/16, F02K 3/06, F02C 3/107, F02C 7/06, F02C 7/36, F01D 25/24, F01D 25/18

(54) **GAS TURBINE ENGINE SHAFT BEARING CONFIGURATION**
KONFIGURATION EINES WELLENLAGERS EINER GASTURBINE
CONFIGURATION DE PALIER D'ARBRE DE MOTEUR À TURBINE À GAZ

(30) Priority: 15.12.2014 US 201414570091
(43) Date of publication of application: 19.10.2016
(73) Proprietor: United Technologies Corporation, Farmington, CT 06032 (US)
(72) Inventor: MERRY, Brian D., Andover, CT Connecticut 06232 (US); SUCIU, Gabriel L., Glastonbury, CT Connecticut 06033 (US)
(74) Representative: Dehns

(56) References cited:
- US-A- 3 792 586
- US-A1- 2009 074 565
- US-B1- 8 402 741

## Description

### BACKGROUND

This disclosure relates to a gas turbine engine bearing configuration for a shaft. In one example, the bearing arrangement relates to a low shaft.

A typical jet engine has two or three spools, or shafts, that transmit torque between the turbine and compressor sections of the engine. Each of these spools is typically supported by two bearings. One bearing, for example, a ball bearing, is arranged at a forward end of the spool and is configured to react to both axial and radial loads. Another bearing, for example, a roller bearing is arranged at the aft end of the spool and is configured to react only to radial loads. This bearing arrangement fully constrains the shaft except for rotation, and axial movement of one free end is permitted to accommodate engine axial growth.

US 8,402,741 B1 discloses a prior art gas turbine engine in accordance with the preamble of claim 1.

### SUMMARY

According to a first aspect of the present invention, there is provided a gas turbine engine as set forth in claim 1.

In a further embodiment of any of the above, a combustor is fluidly connected to the compressor section.

In a further embodiment of any of the above, the core housing includes a first inlet case portion defining an inlet case flow path, and a bearing support portion removably secured to the inlet case portion. A second bearing mounts to the bearing support portion.

In a further embodiment of any of the above, the core housing includes an intermediate case portion defining an intermediate case flow path, and a bearing support portion removably secured to the intermediate case portion. The first bearing is mounted to the bearing support portion.

In a further embodiment of any of the above, the multiple compressor stages include a variable stator vane array, rotatable compressor blades, and a fixed stator vane array.

### BRIEF DESCRIPTION OF THE DRAWINGS

The disclosure can be further understood by reference to the following detailed description when considered in connection with the accompanying drawings wherein:
Figure 1 schematically illustrates a gas turbine engine outside of the scope of the present invention.
Figure 2 is a cross-sectional view of a front architecture of the gas turbine engine shown in Figure 1.
Figure 3 shows a gas turbine engine embodiment in accordance with the present invention.
Figure 4 shows a gas turbine engine arrangement outside of the scope of the present invention.

### DETAILED DESCRIPTION

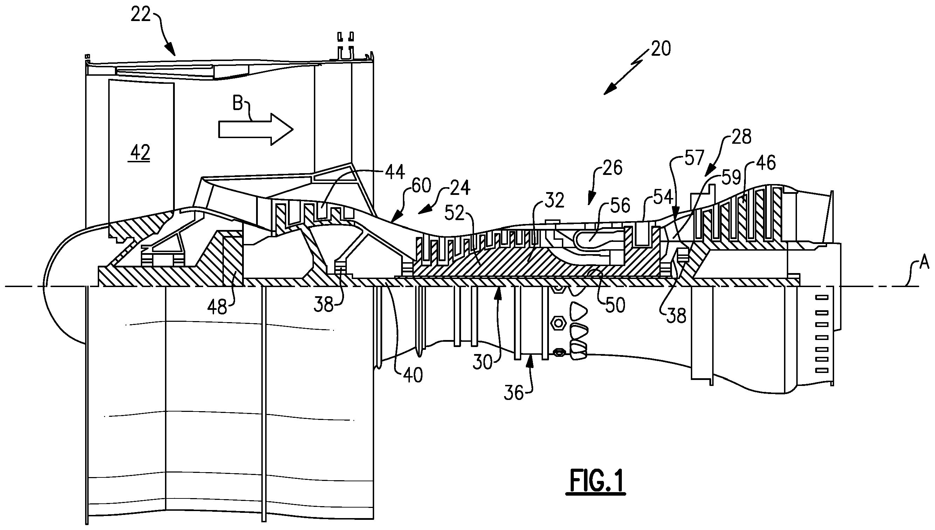

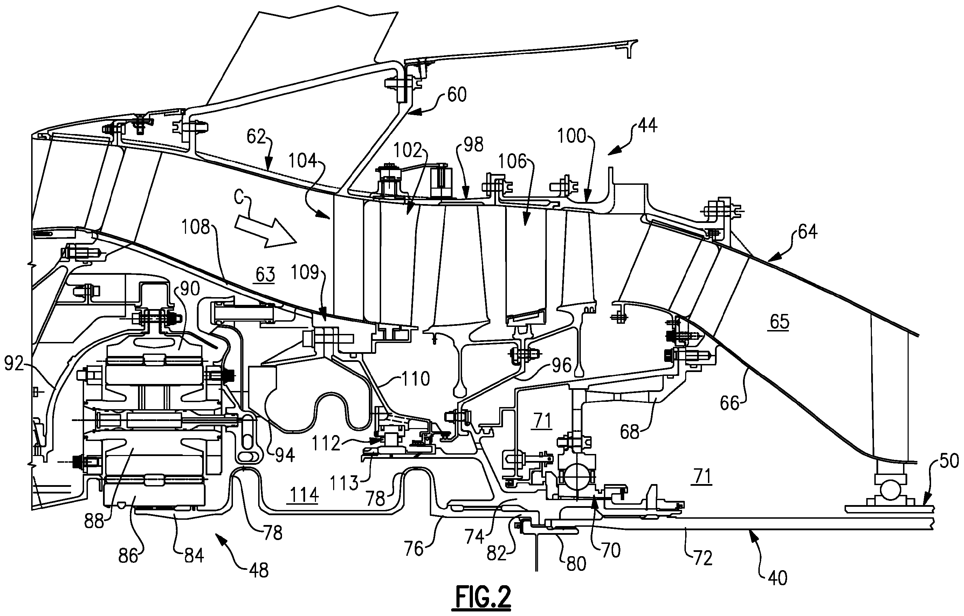

Figure 1 schematically illustrates a gas turbine engine 20 outside of the scope of the present invention. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C (as shown in Figure 2) for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 supports one or more bearing systems 38 in the turbine section 28. The inner shaft 40 and the outer shaft 50 are concentric and rotate via bearing systems 38 about the engine central longitudinal axis A, which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path. The turbines 46, 54 rotationally drive the respective low speed spool 30 and high speed spool 32 in response to the expansion.

The engine 20 in one example a high-bypass geared aircraft engine. In a further example, the engine 20 bypass ratio is greater than about six (6), with an example embodiment being greater than ten (10), the geared architecture 48 is an epicyclic gear train, such as a star gear system or other gear system, with a gear reduction ratio of greater than about 2.3 and the low pressure turbine 46 has a pressure ratio that is greater than about 5. In one disclosed embodiment, the engine 20 bypass ratio is greater than about ten (10:1), the fan diameter is significantly larger than that of the low pressure compressor 44, and the low pressure turbine 46 has a pressure ratio that is greater than about 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a star gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 m), with the engine at its best fuel consumption - also known as bucket cruise Thrust Specific Fuel Consumption ("TSFC"). TSFC is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}(where °R = K x 9/5). The "Low corrected fan tip speed" as disclosed herein according to one non-limiting embodiment is less than about 1150 ft / second (350.5 metres/second).

Referring to Figure 2, a core housing 60 includes an inlet case 62 and an intermediate case 64 that respectively provide an inlet case flowpath 63 and a compressor case flowpath 65. Together, the inlet and compressor case flowpaths 63, 65, in part, define a core flowpath through the engine 20, which directs a core flow C.

The intermediate case 64 includes multiple components, which includes the intermediate case portions 66, and the bearing support 68 in the example, which are removably secured to one another. The bearing support portion 68 has a first bearing 70 mounted thereto, which supports the inner shaft 40 for rotation relative to the intermediate case 64. In one example, the first bearing 70 is a ball bearing that constrains the inner shaft 40 against axial and radial movement at a forward portion of the inner shaft 40. The first bearing 70 is arranged within a bearing compartment 71.

In the example, the inner shaft 40 is constructed of multiple components that include, for example, a main shaft 72, a hub 74 and a flex shaft 76, which are clamped together by a nut 80 in the example. The first bearing 70 is mounted on the hub 74. The flex shaft 76 includes first and second opposing ends 82, 84. The first end 82 is splined to the hub 74, and the second end 84 is splined to and supports a sun gear 86 of the geared architecture 48. Bellows 78 in the flex shaft 76 accommodate vibration in the geared architecture 48.

The geared architecture includes star gears 88 arranged circumferentially about and intermeshing with the sun gear 86. A ring gear 90 is arranged circumferentially about and intermeshes with the star gears 88. A fan shaft 92 is connected to the ring gear 90 and the fan 42 (Figure 1). A torque frame 94 supports the star gears 88 and grounds the star gears 88 to the housing 60. In operation, the inner shaft 40 rotationally drives the fan shaft 92 with the rotating ring gear 90 through the grounded star gears 88.

The low pressure compressor 44 includes multiple compressor stages arranged between the inlet and intermediate case flowpaths 63, 65, for example, first and second compressor stages 98, 100, that are secured to the hub 74 by a rotor 96. The first bearing 70 is axially aligned with one of the first and second compressor stages 98, 100. In one example, a variable stator vane array 102 is arranged upstream from the first and second compressor stages 98, 100. Struts 104 are arranged upstream from the variable stator vane array 102. An array of fixed stator vanes 106 may be provided axially between the first and second compressor stages 98, 100. Although a particular configuration of low pressure compressor 44 is illustrated, it should be understood that other configurations may be used and still fall within the scope of this disclosure.

The inlet case 62 includes inlet case portions 108, and bearing support 110, which are removably secured to one another. The bearing support portion 110 and torque frame 94 are secured to the inlet case portion 108 at a joint 109. The bearing support portion 110 supports a second bearing 112, which is a rolling bearing in one example. The second bearing 112 is retained on the hub 74 by a nut 113, for example, and is arranged radially outward from the flex shaft 76 and radially between the torque frame 94 and flex shaft 76. In the example, the second bearing 112 is axially aligned with and radially inward of the variable stator vane array 102. The geared architecture 48 and the second bearing 112 are arranged in a lubrication compartment 114, which is separate from the bearing compartment 71 in the example.

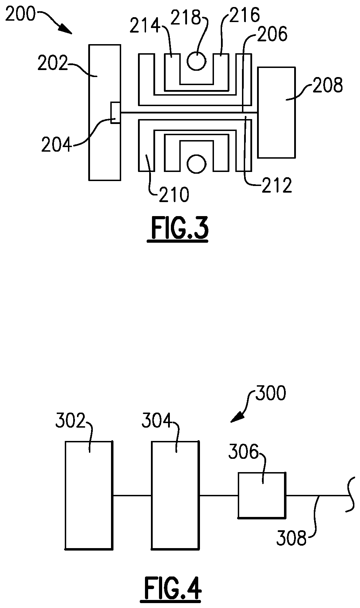

Figure 3 shows an embodiment 200 in accordance with the present invention, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 4 shows an arrangement 300 outside of the scope of the present invention, wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

Although an example embodiment has been disclosed, a worker of ordinary skill in this art would recognize that certain modifications would come within the scope of the claims. For that reason, the following claims should be studied to determine their true scope and content.

## Claims

1. A gas turbine engine (20) comprising:
a core housing (60) providing a core flow path (63,65);
a fan (202);
a compressor section (24) comprising a first pressure compressor (52) and a second pressure compressor (44) upstream from the first pressure compressor (52), the second pressure compressor (44) including multiple compressor stages (98,100);
a shaft (40) supporting a rotor of the second pressure compressor (44) arranged within the core flow path (63,65), wherein the second pressure compressor is fluidly connected to the fan (202);
first and second bearings (70,112) supporting the shaft (40) relative to the core housing (60) and are arranged radially inward of and axially overlapping with at least some of the multiple compressor stages (98,100); and
a gear reduction (204);
wherein the gas turbine engine (20) is a high bypass geared aircraft engine having a bypass ratio of greater than six;
wherein the gas turbine engine (20) comprises three turbine rotors including a fan drive turbine (208), said fan drive turbine (208) being configured to drive said fan (202), while each of the other two of said turbine rotors is configured to drive one of the first and second compressors (52,44), and wherein the gear reduction (204) is positioned between the fan drive turbine (208) and the fan (202).

2. The gas turbine engine (20) according to claim 1, further comprising a combustor (26) fluidly connected to the compressor section (24).

3. The gas turbine engine (20) according to claim 1 or 2, wherein the multiple compressor stages (98,100) includes a variable stator vane array (102), rotatable compressor blades, and a fixed stator vane array (106).

4. The gas turbine engine (20) according to any preceding claim, wherein the core housing (60) or the inlet case (62) includes an inlet case portion (108) defining an inlet case flow path (63), and a bearing support portion (110) removably secured to the inlet case portion (108), the second bearing (112) mounted to the bearing support portion (68).

5. The gas turbine engine (20) according to any preceding claim, wherein the core housing (60) or the intermediate case (64) includes an intermediate case portion (66) defining an intermediate case flow path (65), and a bearing support portion (68) removably secured to the intermediate case portion (66), the first bearing (70) mounted to the bearing support portion (68).

## Patentansprüche

1. Gasturbinentriebwerk (20), umfassend:
ein Kerngehäuse (60), das einen Kernströmungsweg (63,65) bereitstellt;
einen Lüfter (202);
einen Verdichterabschnitt (24), umfassend einen ersten Druckverdichter (52) und einen zweiten Druckverdichter (44) stromaufwärts von dem ersten Druckverdichter (52), wobei der zweite Druckverdichter (44) mehrere Verdichterstufen (98,100) einschließt;
eine Welle (40), die einen Rotor des zweiten Druckverdichters (44) stützt, der in dem Kernströmungsweg (63,65) angeordnet ist, wobei der zweite Druckverdichter fluidisch mit dem Lüfter (202) verbunden ist;
ein erstes und zweites Lager (70,112), welche die Welle (40) in Bezug auf das Kerngehäuse (60) stützen und von zumindest einigen der mehreren Verdichterstufen (98,100) radial nach innen angeordnet sind und diese axial überlappen; und
eine Getriebeuntersetzung (204);
wobei das Gasturbinentriebwerk (20) ein angetriebenes Luftfahrzeugtriebwerk mit hohem Bypass ist, das ein Bypass-Verhältnis aufweist, das größer als sechs ist;
wobei das Gasturbinentriebwerk (20) drei Turbinenrotoren, einschließend eine Lüfterantriebsturbine (208), umfasst, wobei die Lüfterantriebsturbine (208) konfiguriert ist, um den Lüfter (202) anzutreiben, während jeder der anderen zwei der Turbinenrotoren konfiguriert ist, um einen des ersten und zweiten Verdichters (52,44) anzutreiben, und wobei die Getriebeuntersetzung (204) zwischen der Lüfterantriebsturbine (208) und dem Lüfter (202) positioniert ist.

2. Gasturbinentriebwerk (20) nach Anspruch 1, ferner umfassend eine Brennkammer (26), die mit dem Verdichterabschnitt (24) fluidisch verbunden ist.

3. Gasturbinentriebwerk (20) nach Anspruch 1 oder 2, wobei die mehreren Verdichterstufen (98,100) eine verstellbare Statorschaufelanordnung (102), drehbare Verdichterblätter und eine feste Statorschaufelanordnung (106) einschließen.

4. Gasturbinentriebwerk (20) nach einem der vorhergehenden Ansprüche, wobei das Kerngehäuse (60) oder das Einlassgehäuse (62) einen Einlassgehäuseteil (108), der einen Einlassgehäuseströmungsweg (63) definiert, und einen Lagerstützteil (110) einschließt, der abnehmbar an dem Einlassgehäuseteil (108) gesichert ist, wobei das zweite Lager (112) an dem Lagerstützteil (68) montiert ist.

5. Gasturbinentriebwerk (20) nach einem der vorhergehenden Ansprüche, wobei das Kerngehäuse (60) oder das Zwischengehäuse (64) einen Zwischengehäuseteil (66), der einen Zwischengehäuseströmungsweg (65) definiert, und einen Lagerstützteil (68) einschließt, der abnehmbar an dem Zwischengehäuseteil (66) gesichert ist, wobei das erste Lager (70) an dem Lagerstützteil (68) montiert ist.

## Revendications

1. Moteur à turbine à gaz (20), comprenant :
un boîtier central (60) fournissant un trajet d'écoulement central (63, 65) ;
un ventilateur (202) ;
une section de compresseur (24) comprenant un premier compresseur de pression (52) et un second compresseur de pression (44) en amont du premier compresseur de pression (52), le second compresseur de pression (44) incluant de multiples étages de compresseur (98, 100) ;
un arbre (40) supportant un rotor du second compresseur de pression (44) agencé à l'intérieur du trajet d'écoulement central (63, 65), dans lequel le second compresseur de pression est relié de manière fluidique au ventilateur (202) ;
des premier et second paliers (70, 112) supportant l'arbre (40) par rapport au boîtier central (60) et étant agencés radialement vers l'intérieur de et chevauchant axialement au moins certains des multiples étages de compresseur (98, 100) ; et
un démultiplicateur (204) ;
dans lequel le moteur à turbine à gaz (20) est un moteur d'aéronef à engrenages à dilution élevée ayant un taux de dilution supérieur à six ;
dans lequel le moteur à turbine à gaz (20) comprend trois rotors de turbine incluant une turbine d'entraînement de ventilateur (208), ladite turbine d'entraînement de ventilateur (208) étant configurée pour entraîner ledit ventilateur (202), tandis que chacun des deux autres desdits rotors de turbine est configuré pour entraîner l'un des premier et second compresseurs (52, 44), et dans lequel le démultiplicateur (204) est positionné entre la turbine d'entraînement de ventilateur (208) et le ventilateur (202).

2. Moteur à turbine à gaz (20) selon la revendication 1, comprenant en outre une chambre de combustion (26) reliée de manière fluide à la section de compresseur (24).

3. Moteur à turbine à gaz (20) selon la revendication 1 ou 2, dans lequel les multiples étages de compresseur (98, 100) incluent un réseau d'aubes de stator variable (102), des pales de compresseur rotatives et un réseau d'aubes de stator fixe (106) .

4. Moteur à turbine à gaz (20) selon une quelconque revendication précédente, dans lequel le boîtier central (60) ou le carter d'entrée (62) inclut une partie de carter d'entrée (108) définissant un trajet d'écoulement de carter d'entrée (63), et une partie de support de palier (110) fixée de manière amovible à la partie de carter d'entrée (108), le second palier (112) étant monté sur la partie de support de palier (68).

5. Moteur à turbine à gaz (20) selon une quelconque revendication précédente, dans lequel le boîtier central (60) ou le carter intermédiaire (64) inclut une partie de carter intermédiaire (66) définissant un trajet d'écoulement de carter intermédiaire (65), et une partie de support de palier (68) fixée de manière amovible à la partie de carter intermédiaire (66), le premier palier (70) étant monté sur la partie de support de palier (68).
